# EUROPEAN PATENT APPLICATION

(11) **EP 4 746 052 A1**
(43) Date of publication of application: **20.05.2026**
(21) Application number: 25211759.3
(22) Date of filing: 28.10.2025
(51) Int. Cl.: H01M 4/04, H01M 10/54

(54) **TRIMMING AND PEELING SYSTEMS FOR MANUFACTURING DRY ELECTRODES**

(30) Priority: 14.11.2024 US 202418947389
(71) Applicant: Tesla, Inc., Austin, TX 78725 (US)
(72) Inventor: MACNAUGHTON, Daniel, Austin, 78725 (US); EGGLESTON, Bonne Dudgeon, Austin, 78725 (US); YAU, Curtis, Austin, 78725 (US); MATSUMOTO, Matthew Thomas, Austin, 78725 (US); OTTO, Cole, Austin, 78725 (US); HAN, Sang Yun, Austin, 78725 (US); SCHULTZ, Nicholas, Austin, 78725 (US); KRAMER, Theodore, Austin, 78725 (US); KRAWCZYK, Jack, Austin, 78725 (US)
(74) Representative: Zacco Sweden AB

(57) **Abstract**

Generally described, one or more aspects of the present disclosure relate to systems, methods, and devices for trimming and peeling electrode films. The system can be integrated into a calender rolling system and can create multi-lane films with clean edge quality for lamination. The system can include a trimming device including a cutting device, and a material removing device positioned downstream from the cutting device, the material removing device including a scraper element, a support element positioned upstream from the scraper element. and a vacuum element.

## Description

This application claims the benefit of priority to U.S. Patent Application No. 18/947,389, entitled "TRIMMING AND PEELING SYSTEMS FOR MANUFACTURING DRY ELECTRODES," filed on November 14, 2024.

### BACKGROUND

### Field

The present disclosure relates generally to a system for forming a dry electrode film, particularly a system for trimming a dry electrode film on a calender roll apparatus.

### Description of the Related Art

Electrode films can be created using a wet electrode process. Conventional wet electrode processes involve mixing a slurry, coating a metal current collector with the slurry, then drying the slurry onto the current collector. Wet electrode processes can be prone to quality issues such as inconsistent surface finish, inconsistent electrode film thickness, and inconsistent electrode film edges.

Electrode films can also be created using a dry electrode process by calendering a dry electrode powder into a film. When using a dry electrode process, the wet electrode patterning process are not applicable because the dry electrode film is already formed on a calender roll. Accordingly, there is a need for an electrode patterning system and methods for producing dry electrode films.

### SUMMARY

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, a method of manufacturing a plurality of dry electrode films for an energy storage device is described. The method comprises applying a dry electrode material to a calender roll device; trimming an end of the dry electrode material on the calender roll device to form an edge scrap material and a trimmed dry electrode material comprising an edge; removing the edge scrap material from the calender roll device; trimming a pattern into the trimmed dry electrode material on the calender roll device to form a plurality of dry electrode films and a pattern scrap material; and removing the pattern scrap material from the calender roll device.

In some examples, the method further comprises recycling at least one of the edge scrap material and the pattern scrap material to form a second dry electrode material. In some examples, the method further comprises applying the plurality of dry electrode films to a current collector to form an electrode preform. In some examples, the method further comprises separating the electrode preform to form a plurality of electrodes. In some examples, the current collector comprises a single adhesive layer. In some examples, the single adhesive layer is a single conductive carbon layer. In some examples, the plurality of dry electrode films comprise anode dry electrode films. In some examples, the plurality of dry electrode films comprise cathode dry electrode films. In some examples, the pattern is a linear pattern formed lengthwise into the electrode film material.

In some aspects, a system for manufacturing a plurality of dry electrode films for an energy storage device is described. The system comprises a calender roll device; an edge module comprising a cutting device and a material removing device; and a patterning module positioned downstream from the edge module, the patterning module comprising a plurality of pattern cutting devices and a plurality of pattern removing devices.

In some examples, the cutting device comprises a cutting element selected from the group consisting of a crush cutter, a shear cutter, a laser cutter, a plasma cutter, an air jet cutter, and a water jet cutter. In some examples, the material removing device comprises a scraper element selected from the group consisting of a fixed blade scraper, and an oscillating blade scraper. In some examples, each of the plurality of pattern cutting devices comprises a cutting element selected from the group consisting of a crush cutter, a shear cutter, a laser cutter, a plasma cutter, an air jet cutter, and a water jet cutter. In some examples, each of the plurality of pattern removing devices comprises a scraper element, a support element, and a vacuum element. In some examples, the support element is configured to hold an electrode film against the calender roll device. In some examples, the material removing device comprises a scraper element, a support element, and a vacuum element.

In some aspects, a module for modifying a dry electrode film is described. The module comprises a trimming device comprising a cutting device; and a material removing device positioned downstream from the cutting device, the material removing device comprising: a scraper element; a support element positioned upstream from the scraper element; and a vacuum element.

In some examples, the module further comprises a support, wherein the trimming device and the material removing device are attached to the support. In some examples, the trimming device is positioned adjacent to the material removing device. In some examples, the cutting device comprises a cutting element selected from the group consisting of a crush cutter, a shear cutter, a laser cutter, a plasma cutter, an air jet cutter, and a water jet cutter. In some examples, the module further comprises a second trimming device comprising a cutting device. In some examples, the trimming device is positioned adjacent to a first side of the material removing device and the second trimming device is positioned adjacent to a second side of the material removing device.

### BRIEF DESCRIPTION OF THE DRAWINGS

The present inventions are described with reference to the accompanying drawings, in which like reference characters reference like elements, and wherein:
FIG. 1 is a perspective view illustration of an electrode film trimming system, according to some embodiments.
FIG. 2 is a perspective view illustration of a trimming device, according to some embodiments.
FIG. 3 is a perspective view illustration of a material removing device, according to some embodiments.
FIG. 4A is a perspective view illustration of an electrode film edge trimming system, according to some embodiments.
FIG. 4B is a detailed perspective view illustration of the electrode film trimming system illustrated in FIG. 4A, according to some embodiments.
FIG. 5 is a flow chart of a method of trimming the edges of an electrode film, according to some embodiments.
FIG. 6 is a perspective view illustration of a pattern trimming apparatus, according to some embodiments.
FIG. 7 is a flow chart of a method of trimming an electrode film, according to some embodiments.
FIG. 8 is a flow chart of a method of trimming an electrode film, according to some embodiments.
FIG. 9 is a flow chart of a method of forming an electrode, according to some embodiments.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems, methods, and devices for trimming and peeling electrode films. The system can be integrated into a calender rolling system and can create multi-lane films with clean edge quality for lamination. Advantageously, accurately patterning the electrode film on a calender rolling system reduces the need for accuracy in placing and producing of an adhesive layer (e.g., a conductive layer, and/or a conductive carbon layer) on a current collector film when forming an electrode.

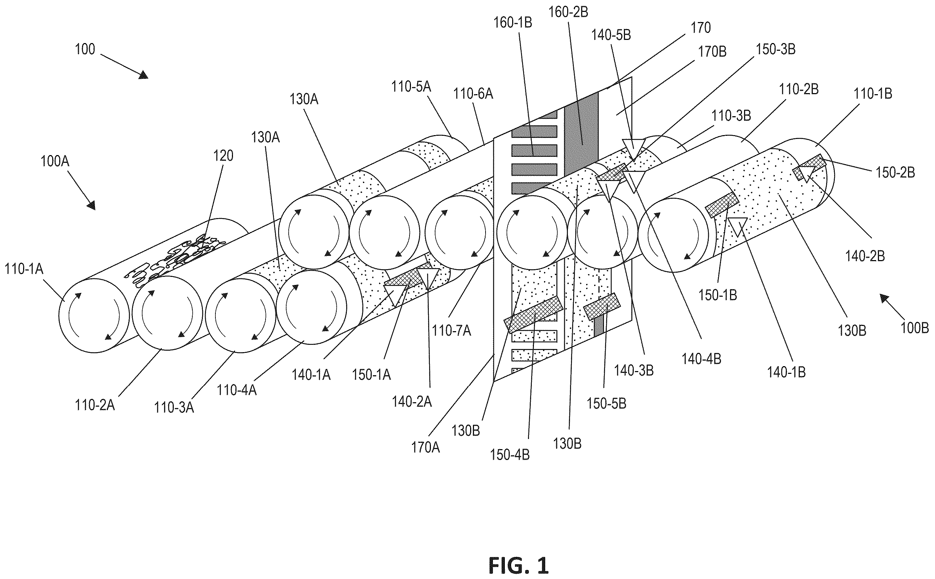

FIG. 1 illustrates a perspective view of an electrode film trimming system 100. FIG. 1 illustrates the process of forming an electrode film using the methods, systems, and devices described herein. FIG. 1 is illustrative of different features and arrangements of the electrode film trimming system 100. Each of the various components and the arrangement of the components demonstrates various possible components and arrangements thereof. However, it should be understood that any combination and/or arrangement of the components is possible.

As illustrated in FIG. 1, the electrode film trimming system 100 includes a plurality of calender rolls 110-1A to 110-7A and 110-1B to 110-3B positioned adjacent to one another in series. Each calender roll 110-1A to 110-7A rotates in the opposite direction of the calender roll adjacent to it. Each calender roll 110-1B to 110-3B rotates in the opposite direction of the calender roll adjacent to it. Calender rolls 110-7A rotates in the opposite direction of calender roll 110-3B.

As shown in FIG. 1, a dry electrode powder 120 is placed between a calender roll 110-1A and 110-2A at a side 100A of the electrode film trimming system 100. The calender rolls 110-1A and 110-2A rotate to compress the dry electrode powder 120 between them (i.e., within the nip) and turn the dry electrode powder 120 into a sheet of a dry electrode material 130A. The dry electrode material 130A is then carried through the electrode film trimming system 100. The dry electrode material 130A passes from between calender rolls 110-1A and 110-2A, to be compressed between calender rolls 110-2A and 110-3A, and to be compressed between calender rolls 110-3A and 110-4A. Each successive calender roll progressively refines the dry electrode material 130A forming a dry electrode material 130A with a prescribed thickness and surface finish (e.g., each successive pair of calender rolls brings the surface finish and thickness of the dry electrode material 130A closer to the desired surface finish and thickness). As illustrated, when the dry electrode material 130A reaches calender roll 110-4A, a pair of trimming devices 140-1A and 140-2A trim a pattern into the dry electrode material 130A and a material removing device 150-1A removes the trimmed material from the calender roll 110-4A. The dry electrode material 130A then passes between calender rolls 110-4A and 110-5A. The dry electrode material 130A passes from between calender rolls 110-4A and 110-5A to be compressed between calender rolls 110-5A and 110-6A and then to be compressed between calender rolls 110-6A and 110-7A. The dry electrode material 130A is pressed by calender roll 110-7A onto a first side 170A (not illustrated) of a current collector film 170.

FIG. 1 also shows another sheet of dry electrode material 130B which is formed on a second side 100B of the electrode film trimming system 100. On a calender roll 110-1B the dry electrode material 130B is trimmed by a pair of trimming devices 140-1B and 140-2B. The pair of trimming devices 140-1B and 140-2B trim off edge material at each end of the dry electrode material 130B. A pair of material removing devices 150-1B and 150-2B remove the material trimmed from the edges of the dry electrode material 130B. The dry electrode material 130B passes between and is compressed by calender roll 110-1B and calender roll 110-2B and passes between and is compressed by calender rolls 110-2B and 110-3B. Each successive calender roll progressively refines the dry electrode material 130B forming a dry electrode material 130B with a prescribed thickness and surface finish (e.g., each successive pair of calender rolls brings the surface finish and thickness of the dry electrode material 130B closer to the desired surface finish and thickness). As illustrated, when the dry electrode material 130B reaches calender roll 110-3B, a pair of pattern trimming devices 140-3B and 140-4B trim a pattern into the dry electrode material 130B and a material removing device 150-3B removes the trimmed material from the calender roll 110-3B. Another pattern trimming device 140-5B cuts the dry electrode material 130B. The dry electrode material 130B is pressed by calender roll 110-3B onto a second side 170B of a current collector film 170. An adhesive layer 160-1B including a pattern is positioned on the second side 170B of the current collector film 170. A portion of the dry electrode material 130B is pressed onto a patterned adhesive layer 160-1B. Another adhesive layer 160-2B is positioned on the second side 170B of the current collector film 170. Another portion of the dry electrode material 130B is pressed onto an adhesive layer 160-2B. The adhesive layer 160 can adhere to the dry electrode material 130B. Two material removal devices 150-4B and 150-5B are positioned below the calender roll 110-3B. The device 150-4B removes any dry electrode material 130B material not adhered to the pattern in the adhesive layer 160-1B. The material removing device 150-5B removes dry electrode material 130B material cut by the trimming device 140-5B, both material not adhered to the adhesive layer 160-2B and material positioned over the adhesive layer 160-2B.

Advantageously, the first plurality of calendar rolls 110-1A to 110-7A and the second plurality of calendar rolls 110-1B to 110-3B may beneficially improve the alignment of the dry electrode material 130A and 130B on the current collector film 170. In some embodiments, the alignment of the dry electrode material 130A relative to the first side 170A and/or the alignment of the dry electrode material 130B relative to the second side 170B can be improved. Additionally, in some embodiments, the alignment of the dry electrode material 130A relative to the dry electrode material 130B can be improved.

Each side of an electrode film trimming system can include 1, 2, 3, 4, 5, 6, 7, 8, 9, 10, or n calender rolls. Each side can begin with dry electrode powder which can then be calendered into a dry electrode material. One or more trimming devices can be positioned adjacent to any of the calender rolls in the system. One or more material removing devices can be positioned adjacent to any of the calender rolls.

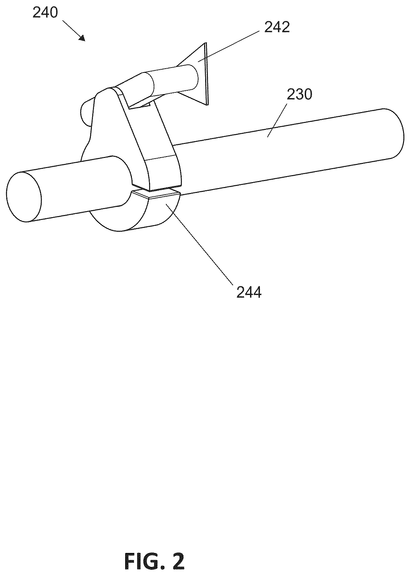

FIG. 2 illustrates a perspective view of a trimming device 240. The trimming device 240 includes a cutting device 242 and a mounting feature 244 according to some embodiments. The mounting feature 244 can attach to a support 230. The cutting device 242 extends outward from the mounting feature 244. The cutting device 242 cuts through electrode film material. The features of trimming device 240 described herein can be applied to any of the trimming devices described elsewhere herein (e.g., trimming devices 140-1A through 140-5B, trimming device 440, and trimming device 640).

The cutting device can be a laser cutting device, a plasma cutting device, an air jet cutting device, a water jet cutting device, a crush cutting blade, a vacuum tearing device, an ultrasonic cutter, or a shear cutting device and/or blade, or combinations thereof. In some embodiments, the cutting device can be a shear cutting device configured to cut on a groove of a calender roll. The cutting device can be a static razor blade or a wheel blade. The cutting device can have a symmetrical blade or an asymmetrical blade. The cutting device can include a V-shaped blade or a square cutting blade. The cutting device can include a fiber laser cutting element, a diode laser cutting element, a CO2 laser cutting element, fiber laser, or a Nd:YAG or Nd:YVO4 laser. In some embodiments, the wavelength of the laser is, is about, or is less than about 1 nm, 200 nm, 400 nm, 600 nm, 800 nm, 1000 nm, 1200 nm, 1400 nm, 1600 nm, 1800 nm, 2000 nm, 2200 nm, 2400 nm, 2600 nm, 2800 nm, 3000 nm, 3200 nm, 3400 nm, 3600 nm, 3800 nm, 4000 nm, 4200 nm, 4400 nm, 4600 nm, 4800 nm, 5000 nm, 5200 nm, 5400 nm, 5600 nm, 5800 nm, 6000 nm, 6200 nm, 6400 nm, 6600 nm, 6800 nm, 7000 nm, 7200 nm, 7400 nm, 7600 nm, 7800 nm, 8000 nm, 8200 nm, 8400 nm, 8600 nm, 8800 nm, 9000 nm, 9200 nm, 9400 nm, 9600 nm, 9800 nm, 10000 nm, 10200 nm, 10400 nm, 10600 nm, 10800 nm, 11000 nm, 11200 nm, 11400 nm, 11600 nm, 11800 nm, 12000 nm, 12200 nm, 12400 nm, 12600 nm, 12800 nm, 13000 nm, 13200 nm, 13400 nm, 13600 nm, 13800 nm, 14000 nm, 14200 nm, 14400 nm, 14600 nm, 14800 nm, or 15000 nm, or any range of values therebetween. The cutting device can include a high-speed steel blade, a carbide blade, or a diamond blade.

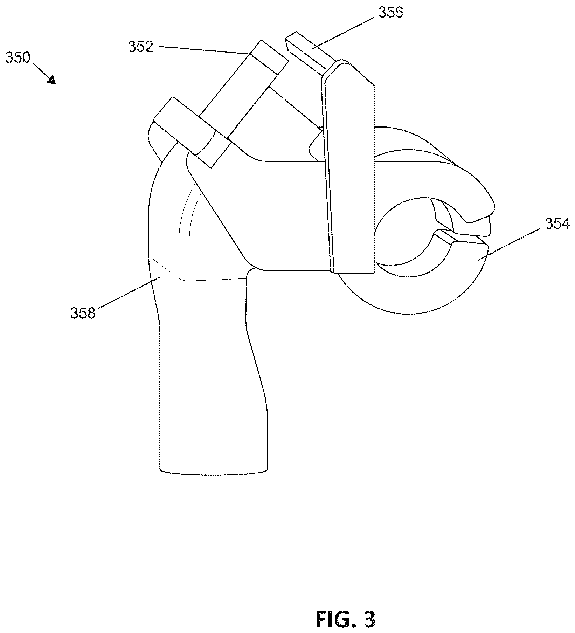

FIG. 3 illustrates a perspective view of a material removing device 350. The material removing device 350 includes a scraper element 352, a support element 356, a vacuum element 358, and a mounting feature 354 according to some embodiments. The vacuum element 358 is positioned under the scraper element 352 and the support element 356 is positioned outward from the scraper element 352. The scraper element 352 removes material from a calender roll and the vacuum element 358 removes material from the scraper element 352. The features of material removing device 350 described herein can be applied to any of the trimming devices described elsewhere herein (e.g., material removing devices 150-1A through 150-5B, material removing device 450, and material removing device 650).

In some embodiments, the scraper element includes a fixed blade scraper or an oscillating blade scraper. In some embodiments the material removing device utilizes gravity to remove scrap material after the scraper element removes material from a calender roll rather than including the vacuum element. In some embodiments the material removing device utilizes both gravity and a vacuum element to remove material. In some embodiments, the material removing device is an ultrasonic cleaning element. In some embodiments, the material removing device includes a chemical removal element. In some embodiments, the material removing device includes a compressed air removal element. In some embodiments, the scraper element is a laser ablation device such as a CO2 laser, fiber laser, or a Nd:YAG or Nd:YVO4 laser.

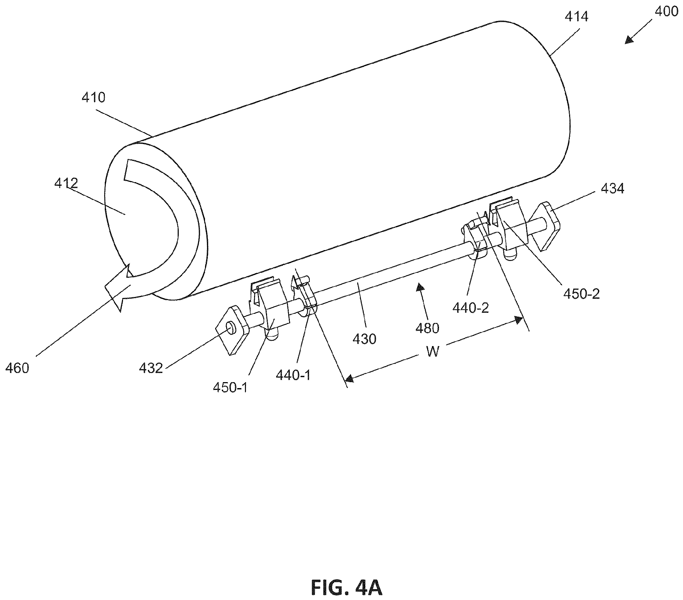

FIG. 4A illustrates a perspective view of an electrode film trimming system 400 including a calender roll 410 and an edge trimming apparatus 480, according to some embodiments. As illustrated, the calender roll 410 rotates in a direction 460. The edge trimming apparatus 480 includes a support 430. The support 430 spans the length of the calender roll 410. A trimming device 440-1 and a material removing device 450-1 are mounted to the support 430 at or near a first end 412 of the calender roll 410. The material removing device 450-1 is positioned outward from the trimming device 440-1 (e.g., the material removing device 450-1 is positioned closer to the first end 412 of the calender roll 410 than the trimming device 440-1). Another trimming device 440-2 and another material removing device 450-2 are mounted to the support 430 at or near a second end 414 of the calender roll 410. The material removing device 450-2 is positioned outward from the trimming device 440-2 (e.g., the material removing device 450-2 is positioned closer to the second end 414 of the calender roll 410 than the trimming device 440-2).

As illustrated, the edge trimming apparatus 400 includes a material removing device 450-1 positioned near or at a first end 432 of a support 430 and a trimming device 440-1 adjacent to the material removing device 450-1. The material removing device 450-1 is positioned between the first end 432 and the trimming device 440-1. The edge trimming apparatus 400 also includes another material removing device 450-2 positioned near or at a second end 434 of a support 430 and a trimming device 440-2 adjacent to the material removing device 450-2. The material removing device 450-2 is positioned between the second end 434 and the trimming device 440-2. There is a width W between the two trimming devices 440-1 and 440-2. The width W between the two trimming devices 440-1 and 440-2 is adjustable for various different widths depending on the electrode film design.

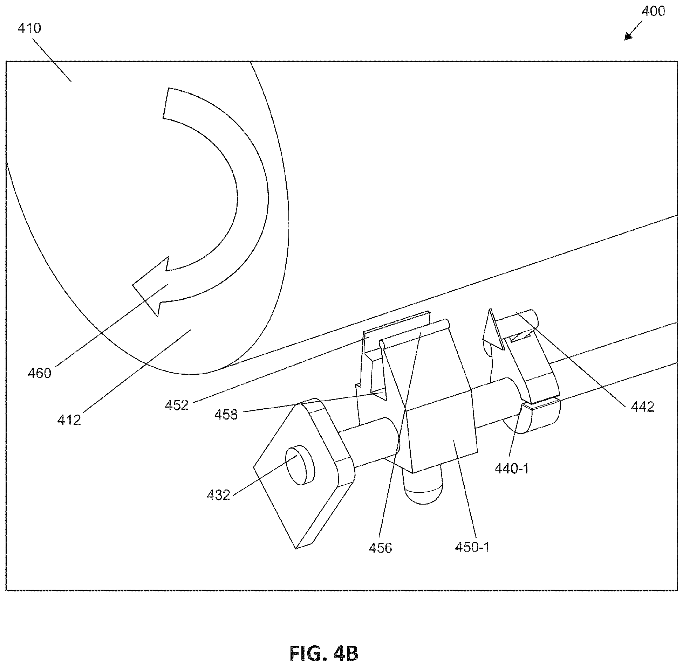

FIG. 4B illustrates a detailed view of a portion of an electrode film trimming system 400. The electrode film trimming system 400 includes a calender roll 410, a trimming device 440-1, and a material removing device 450-1 according to some embodiments. As illustrated, the calender roll 410 rotates in a direction 460. Direction 460 is illustrated as a clockwise rotation however direction 460 can be either clockwise or counterclockwise. As described herein for expository purposes, the position of elements relative to one another and relative to the calender roll 410 or the electrode film trimming system 400 will be described as "upstream" or "downstream" from one another.

As illustrated in FIG. 4B, a cutting device 442 of the trimming device 440-1 is positioned upstream from a scraper element 452 of the material removing device 450-1. Dry electrode material passing through the electrode film trimming system 400 will first be cut by the cutting device 442, then the scraper element 452 will contact the cut dry electrode material and remove it from the surface of the calender roll 410. A vacuum element 458 is positioned under the scraper element 452 so that the vacuum element 458 can suction away the dry electrode material removed by the scraper element 452. The support element 456 is positioned approximately even with the cutting device 442.

The support element 456 supports and contacts the dry electrode material near the cutting point and defines a tangent angle between the scraper element 452 and the calender roll 410. The support element 456 inhibits the vacuum element 458 or scraper element 452 from pulling dry electrode material away from the calender roll 410 upstream from the cutting device 442. The support element 456 assures that the dry electrode material is in contact with the calender roll 410 when the dry electrode material is cut by the cutting device 442. By assuring that the dry electrode material is in contact with the calender roll 410, the quality and precision of the cut in the dry electrode material is improved. The support element 456 is adjustable so that it can be positioned slightly downstream from the cutting device 442, slightly upstream from the cutting device 442, or even with the cutting device 442.

In some embodiments, the vacuum element removes material via conveyance and/or gravity rather than, or in addition to suctioning away material. In some embodiments, the support can include a beam onto which one or more trimming devices and/or one or more material removing devices can be attached. The beam can be cylindrical, triangular, rectangular, polygonal, a linear rail, I-shaped, T-shaped, ovular, or elliptical. The beam can include radial locating features and/or linear locating features such as linear slots, radial slots, mounting holes, set screws, threaded portions, magnetic locators, and/or hard stops. In some embodiments, the trimming devices can include a mounting feature to attach to the support. In some embodiments, the mounting feature can include: a clamp, a bolt pattern, a T-slot attachment, a snap fit, a locator pin, and/or a threaded portion. In some embodiments, the material removing devices can include various mounting feature to attach to the support. In some embodiments, the mounting feature can include: a clamp, a bolt pattern, a T-slot attachment, a snap fit, a locator pin, and/or a threaded portion. In some embodiments, each trimming device is attached to a material removing device. In some embodiments, each trimming device is attached to a material removing device and one of the edge trimming device or the material removing device attaches to the support. In some embodiments, each trimming device independently attaches to the support and each material removing device independently attaches to the support.

In some embodiments, a trimming device includes locating features to aid in positioning a material removing device adjacent to the trimming device. The locating features can locate the material removing device radially and/or linearly relative to the trimming device. The trimming device locating features can include magnetic locators, hard stops, locating planes, locator pins, set screws, and/or set screw detents. In some embodiments, a material removing device includes locating features to aid in positioning a trimming device adjacent to the material removing device. The locating features can locate the trimming device radially and/or linearly relative to the material removing device. The material removing device locating features can include magnetic locators, hard stops, locating planes, locator pins, set screws, and/or set screw detents.

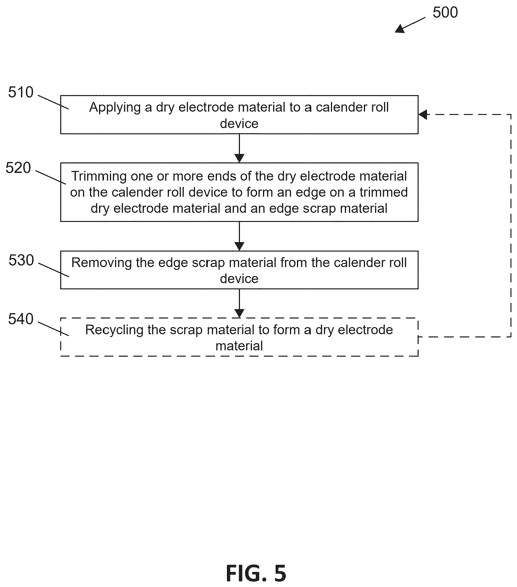

FIG. 5 illustrates a method 500 of trimming the edges of an electrode film. According to some embodiments, at step 510 the method includes applying a dry electrode material to a calender roll device. At step 520, the method includes trimming one or more ends of the dry electrode material on the calender roll device to form an edge on a trimmed dry electrode material and an edge scrap material. At step 530, the method includes removing the edge scrap material from the calender roll device. At step 540, the method optionally includes recycling the scrap material to form a dry electrode material.

In some embodiments, once the dry electrode material is applied to the calender roll device, the edges of the material are inconsistent. The edges can have an inconsistent shape, feathered features, and other material defects not found throughout the remainder of the calendered dry electrode material. The step of trimming one or more ends of the dry electrode material on the calender roll device to form an edge on a trimmed dry electrode material and an edge scrap material separates the inconsistent edges of the dry electrode material from the remainder of the calendered dry electrode material and creates a clean cut which separates the defects of the edge material from the trimmed dry electrode material. In some embodiments, the step including removing the edge scrap material from the calender roll device leaves the clean trimmed material on the calender roll device and removes the edge material. In some embodiments, the step of removing the edge scrap material from the calender roll device can include scraping the edge scrap material off of the calender roll device and vacuuming up the scrapped edge scrap material.

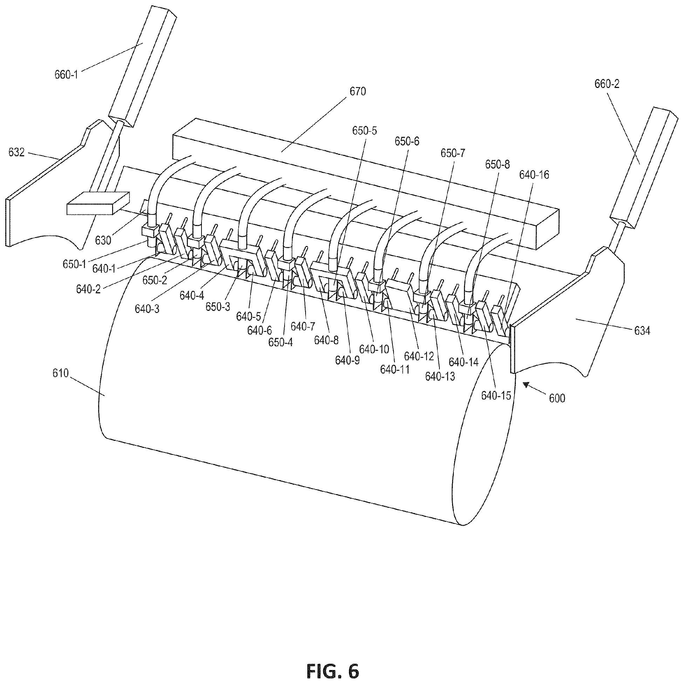

FIG. 6 illustrates a pattern trimming apparatus 600. In some embodiments, the pattern trimming apparatus 600 includes a plurality of trimming devices 640-1 through 640-16 and a plurality of material removing devices 650-1 through 650-9. Each of the trimming devices 640-1 through 640-16 and the material removing devices 650-1 through 650-9 are attached to a support 630. The trimming devices 640-1 through 640-16 and the material removing devices 650-1 through 650-9 can be arranged in a pattern along the length of the support 630. As illustrated, a material removing device 650-1 is arranged at a first end 632 of the pattern trimming apparatus 600 and a pair of trimming devices 640-1 and 640-2 are positioned next to the material removing device 650-1. This pattern of one material removing device followed by a pair of trimming devices continues along the length of the support 630 and the pattern concludes with a material removing device 650-9 arranged at a second end 634 of the pattern trimming apparatus 600. This pattern can alternatively be described as each material removing device having a pattern trimming device on a first side of the material removing device and a pattern trimming device on a second side of the material removing device (e.g., material removing device 650-2 is positioned between pattern trimming apparatus 640-2 and 640-3), other than the material removing device 650-1 and edge trimming device 640-1 at the first end 632 and the material removing device 650-9 and edge trimming device 640-2 at the second end 634. The pattern can be repeated any number of times across the length of the support 630.

For example, the pattern can include two trimming devices and two material removing devices or four trimming devices and three material removing devices. In another example, the pattern can include twelve trimming devices and seven material removing devices. In another example, the pattern can include, include about, include at least, or include at least about 2, 4, 6, 8, 10, 12, 14, 16, 18, or 20 trimming devices or any range of values therebetween and 2, 3, 4, 5, 6, 7, 8, 9, 10, or 11 material removing devices or any range of values therebetween.

The pattern trimming apparatus 600 includes a pair of linear actuators 660-1 and 660-2 and a vacuum manifold 670, in some embodiments. The linear actuators 660-1 and 660-2 move the support 630. By moving the support 630, the position of the trimming devices 640-1 through 640-16 and the material removing devices 650-1 through 650-9 are adjusted relative to a calender roll 610. The vacuum manifold 670 provides suction to each of the material removing devices 650-1 through 650-9 and provides for easy recycling of scrap material from the electrode film trimming system 600.

In some embodiments, the pattern trimming apparatus includes one linear actuator. In some embodiments, the pattern trimming apparatus includes three linear actuators. In some embodiments, the linear actuators are pneumatic actuators, hydraulic actuators, or screw actuators. In some embodiments, the pattern trimming apparatus is fixedly attached to the support. In some embodiments, the pattern trimming apparatus includes more than one vacuum manifold.

In some embodiments, the support includes a beam onto which one or more trimming devices and/or one or more material removing devices attach. The beam can be cylindrical, triangular, rectangular, polygonal, a linear rail, I-shaped, T-shaped, ovular, or elliptical. The beam can include radial locating features and/or linear locating features such as linear slots, radial slots, mounting holes, set screws, threaded portions, magnetic locators, and/or hard stops. In some embodiments, the trimming device includes a mounting feature to attach to the support. In some embodiments, the mounting feature can include: a clamp, a bolt pattern, a T-slot attachment, a snap fit, a locator pin, and/or a threaded portion. In some embodiments, the material removing devices includes a mounting feature to attach to the support. In some embodiments, the mounting feature can include: a clamp, a bolt pattern, a T-slot attachment, a snap fit, a locator pin, and/or a threaded portion. In some embodiments, each trimming device is attached to a material removing device. In some embodiments, each trimming device is attached to a material removing device and one of the trimming device or the material removing device attaches to the support. In some embodiments, each trimming device independently attaches to the support and each material removing device independently attaches to the support.

In some embodiments, a trimming device includes locating features to aid in positioning a material removing device adjacent to the trimming device. The locating features can locate the material removing device radially and/or linearly relative to the trimming device. The trimming device locating features can include magnetic locators, hard stops, locating planes, locator pins, set screws, and/or set screw detents. In some embodiments, a material removing device includes locating features to aid in positioning a trimming device adjacent to the material removing device. The locating features can locate the trimming device radially and/or linearly relative to the material removing device. The material removing device locating features can include magnetic locators, hard stops, locating planes, locator pins, set screws, and/or set screw detents.

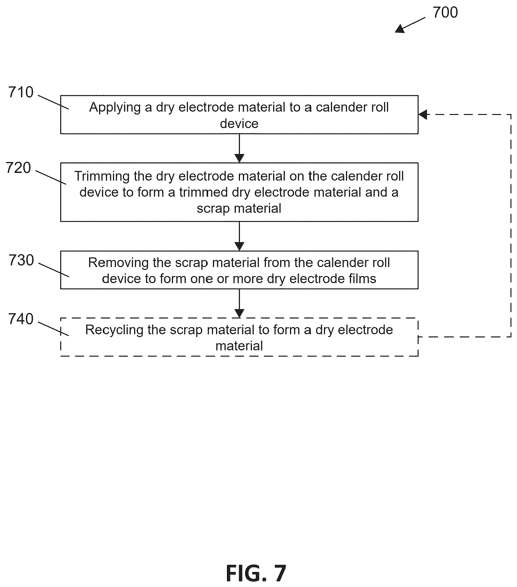

FIG. 7 illustrates a method 700 of removing material from an electrode film. According to some embodiments, at step 710 the method includes applying a dry electrode material to a calender roll device. At step 720, the method includes trimming the dry electrode material on the calender roll device to form a trimmed dry electrode material and a scrap material. At step 730, the method includes removing the scrap material from the calender roll device. At step 740, the method optionally includes recycling the scrap material to form a dry electrode material.

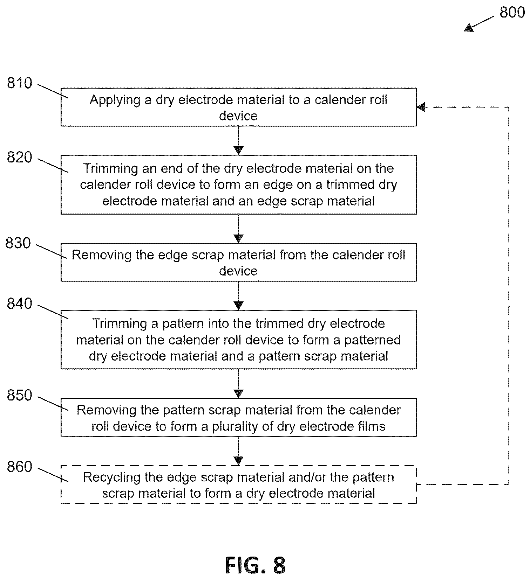

FIG. 8 illustrates a method 800 of preparing a plurality of dry electrode films. According to some embodiments, at step 810 the method includes applying a dry electrode material to a calender roll device. At step 820, the method includes trimming one or more ends of the dry electrode material on the calender roll device to form an edge on a trimmed dry electrode material and an edge scrap material. At step 830, the method includes removing the edge scrap material from the calender roll device. At step 840, the method includes trimming a pattern into the trimmed dry electrode material on the calender roll device to form a patterned dry electrode material and a pattern scrap material. At step 850, the method includes removing the pattern scrap material from the calender roll device to form a plurality of dry electrode films. At step 860, the method optionally includes recycling the edge scrap material and/or the pattern scrap material to form a dry electrode material.

In some embodiments, once the dry electrode material is applied to the calender roll device, the edges of the material are inconsistent. The edges can have an inconsistent shape, feathered features, and other material defects not found throughout the remainder of the calendered dry electrode material. By trimming one or more ends of the dry electrode material on the calender roll device to form an edge on a trimmed dry electrode material and an edge scrap material, the inconsistent edges of the dry electrode material are separated from the remainder of the calendered dry electrode material and a clean cut is created which separates the defects of the edge material from the trimmed dry electrode material. In some embodiments, the step of removing the edge scrap material from the calender roll device leaves the clean trimmed material on the calender roll device and removes the edge material. In some embodiments, the step of removing the edge scrap material from the calender roll device can include scraping the edge scrap material off of the calender roll device and vacuuming up the scrapped edge scrap material. In some embodiments, the vacuumed edge scrap material can then be recycled and reapplied to the calender roll device.

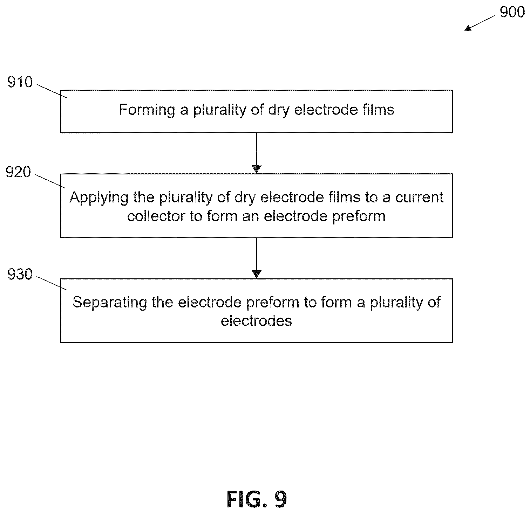

FIG. 9 illustrates a method 900 of preparing a plurality of electrodes. According to some embodiments, at step 910 the method forming a plurality of dry electrode films. At step 920, the method includes applying the plurality of dry electrode films to a current collector to form an electrode preform. At step 930, the method includes separating the electrode preform to form a plurality of electrodes. In some embodiments, separating the electrode preform comprises cutting and/or tearing the preform. In some embodiments, separating the electrode preform comprises separating the plurality of dry electrode films from one another by se cutting and/or tearing the current collector at an area absent of the dry electrode films.

### Electrode Materials, Electrode Films, Electrodes and Energy Storage Devices

In some embodiments, the powders and/or films utilized in systems and methods described may be a dry electrode material/mixture. In some embodiments, the dry electrode material is used to form an electrode film, such as a cathode electrode film or an anode electrode film. In some embodiments, an electrode is formed from the electrode film and a current collector. In some embodiments, the electrode film includes an active material. In some embodiments, the electrode film further comprises at least one binder. In some embodiments, the electrode film comprises the active material in an amount of, of about, of at least, or at least about, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.% or 100 wt.%, or any range of values therebetween. The electrode film can be used in the formation of an energy storage device.

In some embodiments, the electrode and/or current collector comprises an adhesive layer. The dry electrode film adheres to the adhesive layer. In some embodiments, the adhesive layer comprises a conductive layer or coating. In some embodiments, the conductive coating comprises an electrically conductive carbon coating or layer. In some embodiments, the electrode and/or current collector comprises an electrode foil and an insulator (e.g., plastic film) disposed over all, substantially all or a portion of the current collector. In some embodiments, the current collector comprises a single adhesive layer. In some embodiments, the adhesive layer is a patterned adhesive layer. In some embodiments, the adhesive layer comprises a plurality of adhesive elements separated from one another. In some embodiments, the adhesive layer is size-on-size with an electrode film disposed over the adhesive layer. In some embodiments, the adhesive layer is larger than an electrode film disposed over the adhesive layer. In some embodiments, an adhesive layer is disposed over a current collector to form a coated current collector, and an electrode film is disposed over the coated current collector to form an electrode.

In some embodiments, an electrode film material and/or electrode film includes active cathode material. The active cathode material can form the dry electrode material (e.g., powder) discussed herein. In some embodiments, cathode active materials can comprise, for example, a metal oxide, metal sulfide, or a lithium metal oxide. The lithium metal oxide can be, for example, a lithium nickel manganese cobalt oxide (NMC), a lithium manganese oxide (LMO), a lithium iron phosphate (LFP), a lithium cobalt oxide (LCO), a lithium titanate (LTO), and/or a lithium nickel cobalt aluminum oxide (NCA). In some embodiments, cathode active materials can comprise, for example, a layered transition metal oxide (such as LiCoO2 (LCO), Li(NiMnCo)O2 (NMC) and/or LiNi0.8Co0.15Al0.05O2 (NCA)), a spinel manganese oxide (such as LiMn2O4 (LMO) and/or LiMn1.5Ni0.5O4 (LMNO)), an olivine (such as LiFePO4), silicon, silicon oxide (SiOx), aluminum, tin, tin oxide (SnOx), manganese oxide (MnOx), molybdenum oxide (MoO2), molybdenum disulfide (MoS2), nickel oxide (NiOx), or copper oxide (CuOx). The cathode active material can comprise sulfur or a material including sulfur, such as lithium sulfide (Li2S), or other sulfur-based materials, or a mixture thereof.

In some embodiments, the electrode film material and/or anode electrode film includes an anode active material. The anode active material can form the dry electrode material (e.g., powder) discussed herein. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, an electrode film material and/or electrode film comprises a carbon material configured to reversibly intercalate lithium ions. The carbon material can form a portion of the dry electrode material (e.g., powder) discussed herein. In some embodiments, the electrode film comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions.

In some embodiments, an electrode film material and/or electrode film includes a conductive additive. The conductive additive material can form a portion of the dry electrode material (e.g., powder) discussed herein. In some embodiments, the conductive additive may comprise a conductive carbon additive. In some embodiments, the conductive carbon additive comprises a carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film material and/or electrode film includes a binder. The binder can form a portion of the dry electrode material (e.g., powder) discussed herein. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the binder comprises, consists essentially, or consists of PVDF. In some embodiments, the electrode film comprises a binder in an amount of, of about, of at most, or at most about, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween.

As provided herein, a "solvent-free" electrode film is an electrode film that contains no detectable processing solvents, processing solvent residues, or processing solvent impurities. A dry electrode film, such as a cathode electrode film or an anode electrode film that is manufactured with only dry components, may be solvent-free.

A "wet" electrode, "wet process" electrode, or slurry electrode is an electrode or comprises an electrode film prepared by at least one step involving a slurry of active material(s), binder(s), and optionally additive(s), even if a subsequent drying step removes moisture from the electrode or electrode film. Thus, a wet electrode or wet electrode film will include at least one or more processing solvents, processing solvent residues, and/or processing solvent impurities.

In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, the electrode film mixture can be calendered in a calender apparatus to form a free-standing fibrillized electrode film. In some embodiments, a calendered mixture forms a free-standing dry particle film free or substantially free from any liquids, solvents, and resulting residue therefrom. In some embodiments, the electrode film is an anode electrode film. In some embodiments, the electrode film is a cathode electrode film. In some embodiments, the process for fabricating an electrode film is a dry process, where no liquids or solvents are used and the listed raw materials are dry (e.g. one or more are dry powders) such that the resulting electrode film is free or substantially free of any liquids, solvents, and resulting residues.

In some embodiments, an energy storage device comprises a separator, an anode electrode, a cathode electrode, an electrolyte, and a housing, wherein the electrolyte, separator, anode electrode and cathode electrode are disposed within the housing and the separator is positioned between the anode and cathode electrodes. In some embodiments, the cathode comprises the blended cathode active material described herein. In some embodiments, an energy storage device is formed by placing an electrolyte, a separator, an anode electrode, and the cathode electrode within a housing, wherein the separator is placed between the anode electrode and the cathode electrode. In some embodiments the energy storage device is a battery. In some embodiments the energy storage device is a lithium-ion battery. In some embodiments, the energy storage device comprises an anode electrode positioned between two cathode electrodes.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF6), lithium bis(trifluoromethanesulfonyl)imide (LiFSI), lithium tetrafluoroborate (LiBF4), lithium perchlorate (LiClO4), lithium bis(trifluoromethansulfonyl)imide (LiN(SO2CF3)2), lithium trifluoromethansulfonate (LiSO3CF3), lithium bis(oxalato)borate (LiB(C2O4)2), lithium bis(fluorosulfonyl)imide (LiN(SO2F)2, lithium difluoro(oxalato)borate (LiC2BF2O4) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A method of manufacturing a plurality of dry electrode films for an energy storage device, comprising:
applying a dry electrode material to a calender roll device;
trimming an end of the dry electrode material on the calender roll device to form an edge scrap material and a trimmed dry electrode material comprising an edge;
removing the edge scrap material from the calender roll device;
trimming a pattern into the trimmed dry electrode material on the calender roll device to form a plurality of dry electrode films and a pattern scrap material; and
removing the pattern scrap material from the calender roll device.

2. The method of Claim 1, further comprising recycling at least one of the edge scrap material and the pattern scrap material to form a second dry electrode material.

3. The method of Claim 1 or 2, further comprising applying the plurality of dry electrode films to a current collector to form an electrode preform, preferably wherein the current collector comprises a single adhesive layer, more preferably wherein the single adhesive layer is a single conductive carbon layer.

4. The method of Claim 3, further comprising separating the electrode preform to form a plurality of electrodes.

5. The method of any one of Claims 1-4, wherein the plurality of dry electrode films comprise anode dry electrode films and/or cathode dry electrode films.

6. The method of any one of Claims 1-5, wherein the pattern is a linear pattern formed lengthwise into the electrode film material.

7. A system for manufacturing a plurality of dry electrode films for an energy storage device, comprising:
a calender roll device;
an edge module comprising a cutting device and a material removing device; and
a patterning module positioned downstream from the edge module, the patterning module comprising a plurality of pattern cutting devices and a plurality of pattern removing devices.

8. The system of Claim 7, wherein the cutting device comprises a cutting element selected from the group consisting of a crush cutter, a shear cutter, a laser cutter, a plasma cutter, an air jet cutter, and a water jet cutter; and/or wherein each of the plurality of pattern cutting devices comprises a cutting element selected from the group consisting of a crush cutter, a shear cutter, a laser cutter, a plasma cutter, an air jet cutter, and a water jet cutter; and/or wherein each of the plurality of pattern removing devices comprises a scraper element, a support element, and a vacuum element.

9. The system of Claim 7 or 8, wherein the material removing device comprises a scraper element selected from the group consisting of a fixed blade scraper, and an oscillating blade scraper, and/or wherein the material removing device comprises a scraper element, a support element, and a vacuum element.

10. The system of Claim 9, wherein the support element is configured to hold an electrode film against the calender roll device.

11. A module for modifying a dry electrode film, comprising:
a trimming device comprising a cutting device; and
a material removing device positioned downstream from the cutting device, the material removing device comprising:
a scraper element;
a support element positioned upstream from the scraper element; and
a vacuum element.

12. The module of Claim 11, further comprising a support, wherein the trimming device and the material removing device are attached to the support.

13. The module of Claim 11 or 12, wherein the trimming device is positioned adjacent to the material removing device.

14. The module of any one of Claims 11-13, wherein the cutting device comprises a cutting element selected from the group consisting of a crush cutter, a shear cutter, a laser cutter, a plasma cutter, an air jet cutter, and a water jet cutter.

15. The module of any one of Claims 11-14, further comprising a second trimming device comprising a cutting device, preferably wherein the trimming device is positioned adjacent to a first side of the material removing device and the second trimming device is positioned adjacent to a second side of the material removing device.
